# EUROPÄISCHE PATENTSCHRIFT

(11) **EP 3 487 612 B1**
(45) Veröffentlichungstag und Bekanntmachung des Hinweises auf die Patenterteilung: **05.08.2020**
(21) Anmeldenummer: 17734683.0
(22) Anmeldetag: 23.06.2017
(51) Int. Cl.: B01F 15/04, B01F 5/06, B01F 3/08, F01M 9/02, B67D 7/04

(54) **VERWENDUNG EINES BEFÜLLSYSTEMS UND VERFAHREN**
USE OF A FILLING SYSTEM AND METHOD
UTILISATION D'UN SYSTÈME DE REMPLISSAGE ET PROCÉDÉ

(30) Priorität: 19.07.2016 DE 102016213141
(43) Veröffentlichungstag der Anmeldung: 29.05.2019
(73) Patentinhaber: Bayerische Motoren Werke Aktiengesellschaft, 80809 München (DE)
(72) Erfinder: PFLAUM, Sebastian, 82216 Maisach (DE); SAHIN, Hakan, 80689 München (DE); RASTEL, Hans, 86949 Windach (DE); VIERTLBÖCK, Markus, 82377 Penzberg (DE)
(86) Internationale Anmeldenummer: PCT/EP2017/065481
(87) Internationale Veröffentlichungsnummer: WO 2018/015103

(56) Entgegenhaltungen:
- DE-U1- 8 705 621
- US-A- 3 960 295
- US-B1- 6 543 580

## Beschreibung

Die vorliegende Offenbarung betrifft ein Befüllsystem, insbesondere zum Befüllen eines Bauteils, wie eines Getriebegehäuses, mit Betriebs-/Schmierstoff, ein Befüllverfahren sowie eine Verwendung eines Befüllsystems.

Mit der steigenden Vielfalt von Kraftfahrzeugen nimmt auch die Zahl der unterschiedlichen Getriebearten zu. Zur Gewährleistung langer, defektfreier Betriebszeiten benötigt jede Getriebeart einen unterschiedlich additivierten Betriebsstoff für die entsprechenden Baugruppen, welcher in der Regel aus einem Basisöl und einem getriebespezifischen Additiv besteht. Meist ist es üblich, unterschiedliche Getriebe wie beispielsweise Vollautomatikgetriebe, Halbautomatikgetriebe und/oder Getriebe für Elektrofahrzeuge etc. an derselben Fertigungslinie zu produzieren. Der letzte Schritt an der Fertigungslinie ist i.d.R. das Befüllen des jeweiligen Getriebes mit dem Betriebsstoff. Hierbei werden fertig gemischte Betriebsstoff-Mischungen verwendet. Die unterschiedlichen getriebespezifischen Schmierstoffe werden fertig additiviert und mit einer Durchmischung von mindestens 99 % vom Hersteller geliefert. Die restliche Durchmischung erfolgt dann im Getriebe. Wenn nun nach Abschluss einer Fertigungssequenz eine neue Getriebeart gefertigt werden soll, welche eine andere Ölsorte bzw. eine andere Betriebsstoffadditivierung benötigt, hat dies einen aufwendigen und zeitintensiven Umbau zur Folge. Das komplette Tanksystem bzw. die Befüllanlage müssen leer gepumpt und gespült werden. Im Anschluss daran kann dann das neue Öl mit der entsprechenden Additivzusammensetzung eingefüllt werden. Dieses Verfahren ist häufig mit hohem Logistik-, Dispositions- und Lageraufwand verbunden. Zwar wäre es auch möglich, mehrere Tanks mit unterschiedlichen Betriebsstoffen für die verschiedenen Getriebearten vorzuhalten, allerdings ist dies in der Regel bereits aus Platzgründen nicht möglich.

Die US 6,543,580 B1 betrifft eine Preparationsvorrichtung zum Auftragen eines aus mehreren Teilkomponenten bestehenden Preparationsmittels auf einen laufenden Faden.

Die DE 87 05 621 U1 betrifft eine Mischvorrichtung für Schmier- und Kühlflüssigkeiten für Werkzeuge und Maschinen mit einer Mischkammer sowie mindestens zwei Flüssigkeitszuläufen, welche in einstellbarer und vorgegebener Menge die zu mischenden Flüssigkeiten zuleiten, indem jede Zuleitung mit einer Ventilanordnung zur Durchflussmengenregelung versehen ist.

Die US 3,960,295 betrifft eine kontinuierliche Dosiervorrichtung für Flüssigkeiten, welche mit verschiedene Tanks arbeitet, die mit einer Mischeinheit verbunden sind.

Es ist daher eine Aufgabe der vorliegenden Erfindung, ein Befüllverfahren sowie eine Verwendung eines Befüllsystems anzugeben, welche die vorgenannten Nachteile beseitigen und die Produktionskosten senken.

Diese Aufgabe wird durch eine Verwendung eines Befüllsystems gemäß Anspruch 1 und durch ein Befüllverfahren gemäß Anspruch 8 gelöst. Weitere Vorteile und Merkmale ergeben sich aus den Unteransprüchen sowie der Beschreibung und den beigefügten Figuren.

Erfindungsgemäß umfasst das verwendete Befüllsystem, insbesondere zum Befüllen eines Bauteils, insbesondere eines Getriebegehäuses, mit einem Betriebs- bzw. Schmierstoff, insbesondere mit Schmieröl, eine Mischeinheit, welche eine Hauptzuleitung, eine Auslassleitung und zumindest eine Nebenzuleitung aufweist, und wobei das Befüllsystem eine Dosiereinrichtung umfasst, welche ausgelegt ist, Zuströme von und/oder in den Zuleitungen in die Mischeinheit derart einzustellen, dass in einem zu befüllenden Bauteil ein vorgegebenes Mischungsverhältnis einstellbar ist, wobei die Hauptzuleitung ausgelegt ist, einen größeren Zustrom bereitzustellen als die zumindest eine Nebenzuleitung. Damit ist es möglich, die einzelnen Bestandteile der Betriebsstoffmischung, insbesondere also der Schmierstoff- bzw. Schmierölmischung, beim Lieferanten/Hersteller zu kaufen und diese anschließend direkt an der Fertigungslinie, insbesondere während des Befüllvorgangs, je nach gewünschter Zusammensetzung, direkt zu mischen. Dies bringt insbesondere auch den Vorteil mit sich, dass die Mischung immer "frisch" ist. Werden fertige Betriebsstoffmischungen in Tanks vorgehalten, so kann es bei längerer Lagerung zu Entmischungen kommen, welche höchst unerwünscht sind. Zweckmäßigerweise ist die Mischeinheit dahingehend ausgelegt, dass an der Auslassleitung eine Durchmischung von größer als 90 %, insbesondere größer als 95 %, beispielsweise 99 %, erreicht ist. Vorteilhafterweise ist die Hauptzuleitung ausgelegt, einen größeren Zustrom bereitzustellen als die zumindest eine Nebenzuleitung. Dadurch wird dem Umstand Rechnung getragen, dass die verschiedenen Bauteile, beispielsweise die verschiedenen Getriebearten, zwar unterschiedliche Schmierölzusammensetzungen benötigen, diese aber in der Regel einen gemeinsamen Bestandteil aufweisen, welcher bei allen gleich ist. Dieser gemeinsame Bestandteil, im Folgenden Basisadditivierung genannt, macht in der Regel den Hauptteil der Betriebsstoffzusammensetzung aus und liegt in verschiedenen Ausführungsformen z. B. in einem Bereich von etwa 95-99 %, bezogen auf das Gesamtvolumen. Zweckmäßigerweise ist die Hauptzuleitung also ausgelegt, die Basisadditivierung bereitzustellen. Die weitere Additivierung dieser Basisadditivierung erfolgt über die zumindest eine Nebenzuleitung, welche in verschiedenen Ausführungsformen einen Anteil von etwa 1-10 % an der Gesamtmischung beisteuert. Zweckmäßigerweise ermöglicht das Befüllsystem das Mischen der Betriebsstoffmischung und das gleichzeitige Befüllen eines Bauteils, wie eines Getriebes. Aufwendige Umbaumaßnahmen an der Fertigungslinie/Sequenzlinie können entfallen. Zudem ist sichergestellt, dass die Betriebsstoffmischung immer "frisch" gemischt ist, wobei das Mischungsverhältnis derart eingestellt sein kann, dass eine Restmischung im Getriebe erfolgt. Mi anderen Worten stellt das Befüllsystem eine Art "Ölbaukasten" dar.

Zweckmäßigerweise ist die Auslassleitung mittelbar und/oder unmittelbar mit dem zu befüllenden Bauteil verbindbar, beispielsweise über eine Schlauch- und/oder Rohrverbindung. Alternativ ist das Befüllsystem bzw. die Mischeinheit derart ausgebildet, dass eine direkte bzw. unmittelbare Anordnung auf dem entsprechenden Bauteil möglich ist, wobei die Auslassleitung hierzu als entsprechender Anschlussstutzen ausgebildet ist, welcher beispielsweise an oder auf einer entsprechenden Befüllöffnung des Bauteils montiert werden kann.

Gemäß einer bevorzugten Ausführungsform umfasst die Mischeinheit eine Mischkammer, welche als statischer Mischer ausgebildet ist. Ein statischer Mischer oder Statikmischer ist eine Vorrichtung zum Mischen von Fluiden, in der allein die Strömungsbewegung die Vermischung bewirkt. Bewegliche Elemente sind nicht vorgesehen. Der statische Mischer weist strömungsbeeinflussende Elemente auf, welche den Fluidstrom abwechselnd aufteilen und dann wieder zusammenführen, wodurch die Vermischung erreicht wird. Zweckmäßigerweise weist die Mischeinheit einen im Wesentlichen länglichen, beispielsweise rohrförmigen, Grundkörper auf, welcher in seinem Inneren derart strömungsbeeinflussende Elemente aufweist. Der Rohrquerschnitt kann gemäß verschiedenen Ausführungsformen rund, insbesondere kreisrund, oder auch eckig, z. B. quadratisch oder rechteckig, sein. Die strömungsbeeinflussenden Elemente sind z. B. schrauben-, lamellen- oder auch gitterförmig angeordnet. Vorliegend können verschiedene Typen zum Einsatz kommen, beispielsweise Kenix-Mischer, Sulzer SMV-Mischer oder SMX-Mischer, Fluitec-Mischer, etc. Gemäß einer Ausführungsform weist die Mischkammer entlang einer Hauptströmungsrichtung auch unterschiedliche Mischsegmente auf, welche als unterschiedliche Mischertypen ausgebildet sind. Zusätzlich oder alternativ ist es auch möglich, die Mischkammer als dynamischen Mischer auszubilden, welcher zumindest ein sich bewegendes Element umfasst, welches die Mischung bewirkt. Gemäß einer Ausführungsform sind mehrere Nebenzuleitungen entlang einer Hauptströmungsrichtung der Mischeinheit derart versetzt angeordnet, dass die unterschiedlichen Nebenzuleitungen jeweils in unterschiedliche Mischsegmente eingeleitet werden.

Gemäß einer Ausführungsform ist die Mischeinheit auch modulartig ausgebildet, so dass je nach Anforderung, Module mit unterschiedlichen Mischsegmenten/Mischertypen eingesetzt werden können.

Gemäß einer Ausführungsform umfasst das Befüllsystem eine Vielzahl von Nebenzuleitungen, beispielsweise zwei, drei, vier, fünf, sechs, etc. Gemäß einer Ausführungsform sind die Nebenzuleitungen, bezogen auf die Hauptströmungsrichtung der Mischeinheit, in einer Ebene und dabei umfänglich verteilt angeordnet. Wie bereits erwähnt, können mehrere Nebenzuleitungen aber auch entlang der Hauptströmungsrichtung versetzt zueinander angeordnet sein. Grundsätzlich werden durch die Nebenzuleitungen die Additive zugemischt und es kann über die Position der Einleitung der Additive beispielweise auf deren Viskositäten Rücksicht genommen werden. Die Nebenzuleitungen können in die Hauptzuleitung führen und alternativ und/oder zusätzlich können die Nebenleitungen aber auch direkt in die Mischkammer geleitet werden.

Gemäß einer Ausführungsform liegt ein Verhältnis eines Querschnitts der Hauptzuleitung zu einem Gesamteinlassquerschnitt in einem Bereich von etwa 0,6 bis 0,95, bevorzugt in einem Bereich von etwa 0,8 bis 0,93. Dadurch wird konstruktiv ermöglicht, dass die Hauptzuleitung einen größeren Zustrom bereitstellen kann als die zumindest eine Nebenzuleitung. Vorteilhafterweise kann damit die Basisadditivierung bereitgestellt werden, welche den Grundbestandteil der verschiedensten Betriebsstoffmischungen darstellt.

Zweckmäßigerweise weist das Befüllsystem bzw. die Dosiereinrichtung ein oder mehrere Mittel zum Druckaufbau auf bzw. umfasst diese. Insbesondere sind also die Zuleitungen, insbesondere die Hauptzuleitung und die zumindest eine Nebenzuleitung druckbeaufschlagt, wobei übliche Drücke in einem Bereich von bis zu etwa 10 bar liegen. Zweckmäßigerweise ist das Befüllsystem ausgelegt, innerhalb von 8-14 Sekunden, bevorzugt innerhalb von 10-12 Sekunden, ein Bauteil mit einem Fassungsvermögen von etwa einem Liter zu befüllen. Zum Druckaufbau können ein oder mehrere Pumpen, beispielsweise Strömungs- oder Verdrängerpumpen, vorgesehen sein.

Bei Verdrängerpumpen wird das Medium durch in sich geschlossene Volumina befördert. Hierdurch kann, insbesondere bei Anwendung in einer oder den Nebenzuleitungen eine besonders genaue Zumischung erreicht werden. Je nach Anwendungsfall und insbesondere auch abhängig vom notwendigen Fördervolumen kann oder können die Verdrängerpumpen als Konstantpumpen oder Verstellpumpen ausgebildet sein, wobei Konstantpumpen bei jeder Umdrehung immer das gleiche Volumen fördern, Verstellpumpen hingegen eine Einstellung des Verdrängungsvolumens ermöglichen.

Bei Strömungsmaschinen, wie Strömungspumpen, wird die Energieübertragung ausschließlich durch strömungsmechanische Vorgänge bewirkt. Das Medium durchströmt die Pumpe frei ohne Klappen und Ventile. Die Dosierung kann allerdings über Ventile in den Zuleitungen realisiert werden, wobei bei entsprechender Auslegung selbstverständlich auch hier eine sehr hohe Genauigkeit erzielbar ist. Die Nebenzuleitungen können gemäß einer Ausführungsform beispielsweise in entsprechenden Einspritzventilen enden, welche in die Mischkammer bzw. in die Hauptzuleitung führen.

Gemäß einer Ausführungsform umfasst die Dosiereinrichtung eines oder mehrere Ventile, welche in und/oder an den Zuleitungen, also an der Hauptzuleitung und/oder den Nebenzuleitungen und/oder auch an der Auslassleitung, angeordnet sind. Zweckmäßigerweise sind ein oder mehrere Ventile nahe oder direkt an der Mischkammer angeordnet, wodurch etwaige Totvolumina reduziert werden können. Nach dem Schließen eines Ventils strömt also bevorzugt "wenig" nach. Zwar kann dieses Nachströmen durch ein rechnergestütztes Steuersystem oder ein Steuerlogik berücksichtigt werden, welche das Befüllsystem bevorzugt mit umfasst. Die vorgenannte Ausgestaltung ermöglicht aber bereits konstruktiv ein sehr exaktes Einstellen von Mischungsverhältnissen.

Gemäß einer Ausführungsform ist das Befüllsystem bzw. die Dosiereinrichtung dahingehend ausgelegt, dass in den unterschiedlichen Zuleitungen, insbesondere auch in den unterschiedlichen Nebenzuleitungen unterschiedlich hohe Drücke realisierbar sind. Damit kann den ggf. unterschiedlichen Viskositäten unterschiedlicher Additive Rechnung getragen werden.

Gemäß einer Ausführungsform umfasst die Dosiervorrichtung die Steuerlogik bzw. das Steuersystem, welche z. B. prozessor- bzw. rechnerbasiert ausgebildet sind und welche ausgelegt sind, die Fluidströme in den Zuleitungen zu steuern und/oder zu regeln, wobei insbesondere für die Regelung entsprechende Sensoren, beispielsweise im Bereich der Auslassleitung, vorgesehen sein können, welche sowohl den Mischungsgrad als auch das Mischungsverhältnis erfassen können. Zweckmäßigerweise wird durch die Steuerlogik eine steuerbare Kombinatorik zwischen den einzelnen Zuleitungen ermöglicht. Bevorzugt können die Zuströme frei geschaltet werden, sodass z. B. Additive nacheinander und/oder gleichzeitig zu oder weggeschaltet werden können. Bevorzugt ist es auch, verschiedenen Kombinationen verschiedener Additive vorzusehen, wodurch abhängig vom gerade zu befüllenden Bauteil z. B. automatisch die richtige Mischung eingestellt wird.

Gemäß einer Ausführungsform weist die Mischeinheit, insbesondere die Auslassleitung, einen Rücklauf, insbesondere zur Hauptzuleitung oder zur Mischkammer, auf.

Gemäß einer Ausführungsform umfasst das Befüllsystem ein Konditioniersystem, welches zumindest eine Heizeinrichtung aufweist. Zweckmäßigerweise sind die Hauptzuleitung und/oder die zumindest eine Nebenzuleitung mit einer Heizung versehen, wodurch die Viskosität der verschiedenen Zuströme einstellbar ist. Auch in der Mischeinheit bzw. in der Mischkammer selbst können entsprechende Heizelemente, welche beispielsweise elektrisch betrieben werden, vorgesehen sein. Alternativ und/oder zusätzlich kann die Mischeinheit bzw. die Mischkammer auch als solches in der Art eines Wärmetausches durchströmt werden, wodurch insbesondere eine Temperatur der Gesamtmischung konstant gehalten bzw. eingestellt werden kann.

Gemäß einer Ausführungsform ist die Hauptzuleitung mit einem Leitungssystem verbunden oder verbindbar, wobei das Leitungssystem ausgelegt ist, die Basisadditivierung bereitzustellen. Das Leitungssystem wiederum ist mit einem zentralen Tank verbunden, welcher ggf. ortsfern von dem Befüllsystem angeordnet ist. Die Nebenzuleitungen sind jeweils mit tragbaren, mobilen und/oder auswechselbaren Behältern verbunden oder verbindbar, welche im Bereich des Befüllsystems angeordnet sind. Diese "kleinen" Behälter enthalten die Additive, welche der Basisadditivierung zugemischt werden. Die benötigen Volumina sind deutlich geringer, sodass eine Lagerung dieser Behälter auch nahe des Befüllsystems, beispielsweise direkt an einer Fertigungslinie, möglich ist.

Die Erfindung richtet sich weiter auch auf ein Befüllverfahren gemäß Anspruch 8.

Mit den Betriebsstoff-Bestandteilen sind insbesondere eine Basisadditivierung und ein oder mehrere Additive gemeint, wobei die Basisadditivierung den Grundbestandteil, beispielsweise einer Schmierölzusammensetzung für ein Getriebe, darstellt und es sich bei dem oder den Additiven um das oder diejenigen Komponenten handelt, die eine Spezifizierung der jeweiligen Mischung bewirken, beispielsweise für ein Automatikgetriebe, ein Hinterachsgetriebe, eine Getriebe von oder für einen Elektroantrieb/-motor etc. Zweckmäßigerweise erfolgt ein Dosieren bzw. Abmessen der Betriebsstoffbestandteile derart, dass in dem zu befüllenden Bauteil ein vorgegebenes Mischungsverhältnis eingestellt ist. Das Verfahren ermöglicht eine äußerst hohe Flexibilität an der Fertigungs- bzw. an der Montagelinie, da es damit möglich ist, in Sequenz zu produzieren, insbesondere also beispielsweise an einer Fertigungslinie nacheinander unterschiedliche Getriebearten zu fertigen und insbesondere zu befüllen. Ein Umbau für verschiedene Getriebearten kann entfallen, was zu erheblichen Zeit- und Kosteneinsparungen führt. Da sämtliche Additive in konzentrierter Form vorliegen, ist zudem eine äußerst platzsparende Logistik realisierbar. Im Übrigen gelten für das erfindungsgemäße Verfahren die im Zusammenhang mit dem Befüllsystem erwähnten Vorteile analog und entsprechend sowie umgekehrt.

Durch die Schritte des Verfahrens ist es möglich, eine Spülung vorzunehmen, ohne irgendwelche Betriebsstoffbestandteile unnötig zu verschwenden. Gemäß der Ausgestaltung des Verfahrens erfolgt zunächst nur eine Befüllung des zu befüllenden Behälters mit der Basisadditivierung. Nacheinander oder gleichzeitig werden dann die Nebenzuleitungen zum Zuleiten der Additive zugeschaltet. Nach dem Abschalten der Nebenzuleitungen läuft das Basisadditiv noch weiter. Damit wird die Mischeinheit bzw. die Mischkammer automatisch gespült. Dabei wird der Umstand ausgenutzt, dass die Basisadditivierung derjenige Bestandteil der Mischung ist, der allen zu befüllenden Bauteilen gemeinsam ist.

Wird nun gleich im Anschluss an den vorher beschriebenen Befüllvorgang eine andere Getriebeart befüllt, so ist keine neue, aufwendige Spülung der Mischeinheit notwendig. Auch hier wird wieder so vorgegangen, dass zunächst nur die Basisadditivierung oder die Mischung in das zu befüllende Bauteil eingeleitet wird, wobei im Anschluss die Nebenleitungen abgeschaltet werden, sodass eine Spülung erfolgt.

Die Erfindung richtet sich abschließend auch auf die Verwendung eines Befüllsystems zur Befüllung eines Bauteils an einer Montagelinie, insbesondere an einer Sequenzlinie, mit Betriebsstoff(en), insbesondere Schmierstoff oder Schmieröl.

Weitere Vorteile und Merkmale ergeben sich aus der nachfolgenden Beschreibung einer Ausführungsform des Befüllsystems mit Bezug auf die beigefügte Figur.

Es zeigt:

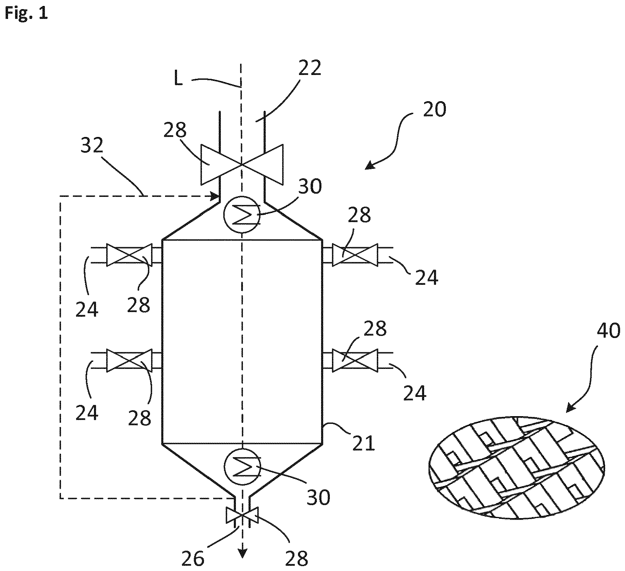

- Fig. 1:: eine schematische Ansicht eines Befüllsystems.

**Fig. 1** zeigt eine Mischeinheit 20 umfassend eine Mischkammer 21, welche sich entlang einer Längsrichtung bzw. Hauptströmungsrichtung L erstreckt. An der Mischkammer sind mehrere Zuleitungen, insbesondere eine Hauptzuleitung 22 und vier Nebenzuleitungen 24 angeordnet, wobei die Nebenzuleitungen 24 im Wesentlichen seitlich in die Mischkammer 21 führen. Über die Zuleitungen 22 und 24 werden Betriebsstoffbestandteile, wie z. B. Schmierölbestandteile, in die Mischeinheit 20 bzw. in die Mischkammer 21 geführt. Die Hauptzuleitung 22, welche insbesondere der Zuleitung einer Basisadditivierung dient, erstreckt sich entlang der Hauptströmungsrichtung L. Die Mischkammer 21 endet in einem Auslass bzw. in einer Auslassleitung 26. Von der Auslassleitung 26 führt ein Rücklauf 32 zurück in die Hauptzuleitung 22. Sämtliche Zuleitungen 22 und 24, wie auch die Auslassleitung 26 sind mit Ventilen 28 versehen, wodurch die Zuströme bzw. der Abstrom aus der Auslassleitung 26 steuerbar bzw. regelbar sind. Die Ventile 28 sind in den Zuleitungen 22 und 26 mit Vorteil besonders nahe der Mischkammer 21 montiert, wodurch etwaige Totvolumina reduziert werden können, wodurch wiederum das Mischungsverhältnis sehr exakt einstellbar ist. Skizziert sind weiter zwei Heizeinrichtungen 30, welche im Bereich der Mischkammer 21 angeordnet sind. In der rechten Bildhälfte ist beispielhaft und perspektivisch eine Mischgeometrie bzw. ein Ausschnitt eines Mischsegments 40 skizziert, welches im Inneren der Mischkammer 21 ausgebildet ist. Bevorzugterweise ist die Mischeinheit 20 bzw. insbesondere die Mischkammer 21 als statischer Mischer ausgebildet, wobei es allerdings auf die genaue geometrische Ausgestaltung vorliegend nicht ankommt. Diese ist einzelfallabhängig von der Art der verwendeten bzw. zu mischenden Betriebsstoffe zu wählen. Grundsätzlich ist in der Fig. 1 lediglich eine skizzenhafte bzw. schematische Darstellung abgebildet, welche den Grundaufbau des Befüllsystems verdeutlichen soll.

### Bezugszeichenliste

- 20: Mischeinheit
- 21: Mischkammer
- 22: Hauptzuleitung
- 24: Nebenzuleitung
- 26: Auslass, Auslassleitung
- 28: Ventil
- 30: Heizeinrichtung
- 32: Rücklauf
- 40: Mischgeometrie
- L: Längsrichtung, Hauptströmungsrichtung

## Patentansprüche

1. Verwendung eines Befüllsystems zum Befüllen eines Bauteils mit Betriebsstoff,
umfassend eine Mischeinheit (20), welche eine Hauptzuleitung (22), eine Auslassleitung (26) und zumindest eine Nebenzuleitung (24) aufweist, wobei die Hauptzuleitung (22) ausgelegt ist, eine Basisadditivierung bereitzustellen, und
wobei die Basisadditivierung über die zumindest eine Nebenzuleitung additiviert (24) wird, und
wobei das Befüllsystem eine Dosiereinrichtung umfasst, welche ausgelegt ist, Zuströme von und/oder in den Zuleitungen (22, 24) in die Mischeinheit (20) derart einzustellen, dass in einem zu befüllenden Bauteil ein vorgegebenes Mischungsverhältnis einstellbar ist,
wobei die Hauptzuleitung (22) ausgelegt ist, einen größeren Zustrom bereitzustellen als die zumindest eine Nebenzuleitung (24), und
wobei die Fluidströme in den Zuleitungen (22, 24, 26) mittels einer Steuerlogik derart gesteuert und/oder geregelt werden, dass nach einem Abschalten der Nebenzuleitungen die Basisadditivierung weiterläuft.

2. Verwendung nach Anspruch 1,
wobei die Mischeinheit (20) eine Mischkammer (21) umfasst, welche als statischer Mischer ausgebildet ist.

3. Verwendung nach Anspruch 1 oder 2,
umfassend eine Vielzahl von Nebenzuleitungen (24).

4. Verwendung nach einem der vorhergehenden Ansprüche,
wobei die Dosiereinrichtung ein oder mehrere Mittel zum Druckaufbau umfasst.

5. Verwendung nach einem der vorhergehenden Ansprüche,
wobei die Dosiereinrichtung eines oder mehrere Ventile (28) umfasst, welche in und/oder an den Leitungen (22, 24, 26) angeordnet sind.

6. Verwendung nach einem der vorhergehenden Ansprüche,
wobei die Mischeinheit (20), insbesondere die Auslassleitung (26), einen Rücklauf (32), insbesondere zur Hauptzuleitung (22), aufweist.

7. Verwendung nach einem der vorhergehenden Ansprüche, umfassend ein Konditioniersystem, welches zumindest eine Heizeinrichtung (30) aufweist.

8. Befüllverfahren zur Befüllung eines Bauteils mit Betriebsstoff, umfassend die Schritte:
- Bereitstellen eines zu befüllenden Bauteils sowie mehrerer Betriebsstoffbestandteile, wobei die Betriebsstoffbestandteile eine Basisadditivierung und zumindest ein Additiv umfassen;
- Mischen von zumindest zwei Betriebsstoffbestandteilen zu einer Mischung und Befüllen des zu befüllenden Bauteils;
- Einleiten der Basisadditivierung in das zu befüllende Bauteil im Anschluss.

## Claims

1. Use of a filling system for filling a component with an operating material,
comprising a mixing unit (20) which has a primary supply line (22), an outlet line (26), and at least one secondary supply line (24), wherein the primary supply line (22) is conceived for providing a basic additive feed; and
wherein the basic additive feed is fed by way of the at least one secondary supply line (24); and wherein the filling system comprises a metering installation which is conceived for setting supply flows from and/or in the supply lines (22, 24) into the mixing unit (20) in such a manner that a predefined mixing ratio is able to be set in a component to be filled; wherein the primary supply line (22) is conceived for providing a larger supply flow than the at least one secondary supply line (24); and
wherein the fluid flows in the supply lines (22, 24, 26) by means of a control logic are controlled by open loop and/or closed loop in such a manner that the basic additive feed continues after the secondary supply lines have been switched off.

2. Use according to Claim 1,
wherein the mixing unit (20) comprises a mixing chamber (21) which is configured as a static mixer.

3. Use according to Claim 1 or 2,
comprising a multiplicity of secondary supply lines (24) .

4. Use according to one of the preceding claims, wherein the metering installation comprises one or a plurality of means for building up pressure.

5. Use according to one of the preceding claims, wherein the metering installation comprises one or a plurality of valves (28) which is/are disposed in and/or on the lines (22, 24, 26).

6. Use according to one of the preceding claims, wherein the mixing unit (20), in particular the outlet line (26), has a return flow (32), in particular to the primary supply line (22).

7. Use according to one of the preceding claims, comprising a conditioning system which has at least one heating installation (30).

8. Filling method for filling a component with an operating material, comprising the steps:
- providing a component to be filled as well as a plurality of operating material component parts, wherein the operating material component parts comprise a basic additive feed and at least one additive;
- mixing at least two operating material component parts so as to form a mixture, and filling the component to be filled;
- subsequently directing the basic additive feed into the component to be filled.

## Revendications

1. Utilisation d'un système de remplissage pour remplir un élément structural d'une matière consommable,
comprenant une unité de mélange (20), qui possède une conduite d'arrivée principale (22), une conduite de décharge (26) et au moins une conduite d'arrivée auxiliaire (24),
la conduite d'arrivée principale (22) étant conçue pour fournir une additivation de base, et
l'additivation de base étant ajoutée par le biais de l'au moins une conduite d'arrivée auxiliaire (24), et
le système de remplissage comportant un dispositif de dosage, lequel est conçu pour régler les flux d'arrivée depuis et/ou vers les conduites d'arrivée (22, 24) dans l'unité de mélange (20) de telle sorte qu'un rapport de mélange prédéfini peut être réglé dans un élément structural à remplir,
la conduite d'arrivée principale (22) étant conçue pour fournir un flux d'arrivée supérieur à celui de l'au moins une conduite d'arrivée auxiliaire (24),
les flux de fluide dans les conduites d'arrivée (22, 24, 26) étant commandés et/ou régulés au moyen d'une logique de commande de telle sorte que l'additivation de base se poursuit après la mise hors circuit des conduites d'arrivée auxiliaires.

2. Utilisation selon la revendication 1, l'unité de mélange (20) comportant une chambre de mélange (21) qui est réalisée sous la forme d'un mélangeur statique.

3. Utilisation selon la revendication 1 ou 2, comprenant une pluralité de conduites d'arrivée auxiliaires (24).

4. Utilisation selon l'une des revendications précédentes, le dispositif de dosage comportant un ou plusieurs moyens de mise en pression.

5. Utilisation selon l'une des revendications précédentes, le dispositif de dosage comportant une ou plusieurs vannes (28) qui sont disposées dans et/ou sur les conduites (22, 24, 26).

6. Utilisation selon l'une des revendications précédentes, l'unité de mélange (20), notamment la conduite de décharge (26), possédant un retour (32), notamment vers la conduite d'arrivée principale (22).

7. Utilisation selon l'une des revendications précédentes, comportant un système de conditionnement, qui possède au moins un dispositif de chauffage (30).

8. Procédé de remplissage pour remplir un élément structural d'une matière consommable, comprenant les étapes suivantes :
- fourniture d'un élément structural à remplir ainsi que plusieurs éléments constitutifs de matière consommable, les éléments constitutifs de matière consommable comprenant une additivation de base et au moins un additif ;
- mélange d'au moins deux éléments constitutifs de matière consommable pour obtenir un mélange et remplissage de l'élément structural à remplir ;
- pour terminer, introduction de l'additivation de base dans l'élément structural à remplir.
